# EUROPÄISCHE PATENTANMELDUNG

(11) **EP 4 575 241 A1**
(43) Veröffentlichungstag der Anmeldung: **25.06.2025**
(21) Anmeldenummer: 23219527.1
(22) Anmeldetag: 21.12.2023
(51) Int. Cl.: F16B 15/06

(54) **SETZBOLZEN MIT SCHAFTGEWINDE UND ANTRIEBSMERKMAL**

(71) Anmelder: Böllhoff Verbindungstechnik GmbH, 33649 Bielefeld (DE)
(72) Erfinder: HISCHER- BRINKMOELLER, Yannik, 33014 Bad Driburg (DE); FRÖMMER, Sven, 33659 Bielefeld (DE)
(74) Vertreter: HWP Intellectual Property

(57) **Zusammenfassung**

Ein Nagel zum Herstellen einer zerstörungsfrei drehend lösbaren Verbindung zwischen mindestens einem ersten und einem zweiten Bauteil, von denen zumindest ein Bauteil nicht vorgelocht ist, der die folgenden Merkmale aufweist: einen Kopf mit einer schaftabgewandten Seite, an der ein Antriebsmerkmal angeordnet ist, und einer schaftzugewandten Seite mit einer Unterkopfringnut, einen integral mit dem Kopf ausgebildeten und sich in axialer Richtung des Nagels erstreckenden Schaft, der an einem dem Kopf gegenüberliegenden Ende in einer Spitze ausläuft, in dem der Schaft einen kopfzugewandten ersten axialen Gewindeabschnitt mit einem selbstformenden Gewinde, einen kopfabgewandten zweiten axialen Gewindeabschnitt mit einem tragendenden und nicht-selbstformenden Gewinde und einen axialen Spitzenbereich aufweist.

## Beschreibung

### 1. Gebiet der Erfindung

Die vorliegende Erfindung betrifft einen Nagel zum Herstellen einer zerstörungsfrei drehend lösbaren Verbindung zwischen mindestens zwei Bauteilen, ein Fügeverfahren für den Nagel, eine Bauteilverbindung aus Nagel und mindestens zwei Bauteilen sowie ein Löseverfahren des Nagels aus der Bauteilverbindung.

### 2. Hintergrund der Erfindung

Im Stand der Technik sind verschiedene Fügeelemente bekannt, die zur Verbindung von mindestens zwei übereinander angeordneten Bauteilen genutzt werden. Es ist vorteilhaft, die Bauteile im nicht vorgelochten Zustand miteinander verbinden zu können, da auf diese Weise der Arbeitsaufwand zum Vorlochen der Bauteile und zum späteren Ausrichten der vorgelochten Bauteile und des einzubringenden Fügeelements vermieden werden.

Zum Verbinden von mindestens zwei übereinander angeordneten nicht vorgelochten Bauteilen ist das Fließformschrauben verbreitet. Dabei wird eine Schraube mit hoher Drehzahl axial auf miteinander zu verbindende Bauteile aufgesetzt. Die durch die Drehung erzeugte Reibungswärme plastifiziert den Bauteilwerkstoff, sodass basierend auf einer axialen Setzbewegung die Fließformschraube durch die übereinander angeordneten Bauteile hindurchgetrieben werden kann. Eine entsprechende Fließformschraube und ein damit genutztes Verfahren ist in der WO 90/11458 beschrieben. Die Loch- und Gewindeformen der Schraube mit bis zu 6 mm Gewindeinnendurchmesser dient der Verbindung von Metallblechen. Diese Schraube umfasst einen Kopf, einen Gewindeschaft und einen sich daran anschließenden Zylinderteil mit einem unter dem Flankendurchmesser des Gewindeschafts liegenden Durchmesser, welches in ein sich verjüngendes Lochformteil übergeht. Der Gewindeschaft geht über eine sich etwa über vier Gewindegänge erstreckende Verjüngung in das Zylinderteil über, dessen Länge etwa der vierfachen Blechdicke entspricht. Dieses Lochformteil ist zudem mit einem selbstformenden Gewinde ausgestattet. Das Lochformteil endet mit einer balligen Reibfläche, die einem Radius von etwa 0,5 mm entspricht. Die gesamte Schraube besteht einstückig aus vergütetem Stahl mit einer Zugfestigkeit von bis zu 1400 N/mm². Zum Setzen dieser Fließformschraube ist es erforderlich, die Fließformschraube in eine ausreichend hohe Drehzahl zu versetzen. Zudem erfordert das mittels Reibung aufzuweichende Blechmaterial und das nachfolgende Fügen der Fließformschraube in die übereinander angeordneten Bleche eine relativ hohe Taktzeit. Neben dieser Taktzeit ist ebenfalls mit einzuberechnen, dass das zunächst aufgeweichte Metall der zu verbindenden Blechteile wieder Aushärten muss, um eine verlässliche und belastbare Verbindung mithilfe der Fließformschraube herstellen zu können.

Derartige Taktzeiten sind nicht für alle Arbeitsabläufe geeignet, da der zeitliche Arbeitsaufwand zum Herstellen einer derartigen Verbindung einen zunehmenden Stellenwert in der heutigen Produktion besitzt.

Weitere Beispiele für Fließformschrauben und in Kombination mit derartigen Fließformschrauben genutzte Fügeverfahren sind beschrieben in die DE 10 2010 025 387 A1, EP 2 944 418 A1, WO 2014/036986 A1 und DE 10 2014 208 889 A1.

DE 10 2016 010 295 A1 beschreibt ein Fügeelement zum Verbinden von zumindest zwei übereinander angeordneten Bauteilen, insbesondere metallische Bauteile, mit einem Nagelkopf und einem Nagelschaft. Der Nagelschaft weist an seiner radialen Außenseite ein Gewinde großer Steigung auf. Die Gewindeform an der radialen Außenseite des Nagelschafts führt bei ausschließlich axialer Belastung des Nagels zu einer Drehbewegung des Nagels während des Fügevorgangs. Dieses Drehen wird aber gerade nicht durch ein von außen aufgebrachtes Drehmoment erzeugt, wie es von der zuvor beschriebenen Fließformschraube bekannt ist.

DE 10 2015 215 827 A1 beschreibt ein zweiteiliges Fügeelement, was ähnlich wie ein Nagel in einen Stapel aus zumindest zwei Bauteilen eingeschossen wird. Dieses zweiteilige Fügeelement bzw. dieser zweiteilige Nagel hat den Vorteil, dass er nicht vorgelochte Bauteile gesetzt werden kann. So lässt sich mit relativ geringem Aufwand eine form- und kraftschlüssige Fügeverbindung zwischen wenigstens zwei Bauteilen herstellen. Der zweiteilige Nagel besteht aus einem nagelartigen Außenteil, das einen Schaft mit Kopf (10) und Spitze aufweist, wobei der Schaft als Hohlschaft mit einer kopfseitigen Öffnung ausgebildet ist. Zudem ist ein stiftartiges Innenteil vorgesehen, dass über die kopfseitige Öffnung in den Hohlschaft des Außenteils eingetrieben wird und dabei das Schaftmaterial an der Spitze nach außen verdrängt und plastisch verformt.

DE 102 58 238 A1 beschreibt eine Nagelschraube zur Herstellung einer Fügeverbindung und ein Fügeverfahren unter Verwendung dieser Nagelschraube. Die Nagelschraube umfasst einen sich von ihrem Kopf (10) erstreckenden Schaft mit einem Lochformabschnitt, der eine keglige Nagelspitze mit einem unmittelbar oder mittelbar axial anschließenden unteren Zylinderschaft aufweist. An den unteren Zylinderschaft des Lochformabschnitts schließt axial ein Gewindeformabschnitt an, der ein selbstformendes bzw. schneidendes Gewinde aufweist, dessen Kerndurchmesser dem Außendurchmesser des unteren Zylinderschafts entspricht. Axial an den Gewindeformabschnitt schließt sich ein oberer Zylinderschaft und ein Schraubenkopf an. Der Durchmesser des oberen Zylinderschafts ist kleiner als der Gewindeaußendurchmesser. Zudem ist auf dem oberen Zylinderschaft ein nicht-selbstformendes Gewinde vorgesehen. Der obere Zylinderschaft und der Gewindeformabschnitt sind in ihrer axialen Länge so dimensionierbar, dass wenigstens zwei übereinanderliegende Fügepartner ohne Vorlochung verbindbar sind, dergestalt, dass nach Herstellung der Fügeverbindung der Gewindeformabschnitt im untersten Fügepartner und der obere Zylinderschaft im wenigstens einen oberen Fügepartner aufgenommen sind.

Zum Herstellen einer Verbindung mithilfe dieser Nagelschraube wird zunächst die Nagelschraube mit einer Schlagvorrichtung mit einem einzigen Schlag so weit in die Fügepartner eingeschlagen, dass der Beginn des Gewindeformabschnitts an der Schraubenseite zugewandten Oberseite des oberen Fügepartners angeordnet ist. Nachfolgend wird die Nagelschraube mithilfe einer Schraubenvorrichtung unter Ausbildung der Gewinde in den Fügepartnern eingeschraubt. Das Einschrauben ist beendet, sobald das kopfzugewandte Bauteil an einer Unterseite des Schraubenkopfes anliegt.

Die oben beschriebenen Fügeelemente haben den Nachteil, dass sie sich nur mit relativ hohem Aufwand aus einer hergestellten Fügeverbindung lösen lassen. Dies ist jedoch genau dann erforderlich, wenn eine hergestellte Fügeverbindung fehlerhaft ist oder sich aufgrund äußerer Einflüsse gelöst hat.

Zum Entfernen eines Fügeelements beschreibt DE 10 2009 053 853 A1 ein Verfahren zum Lösen einer zwischen wenigstens zwei Bauteilen mittels eines Nagels hergestellten Nagelverbindung. Der in dieser Verbindung eingesetzte Nagel besitzt einen zylindrischen Flachkopf als Nagelkopf und einen eine Oberflächenprofilierung aufweisenden Nagelschaft. Zudem weist der Nagelkopf auf seiner Oberseite eine Auszieh-Ausnehmung auf, ferner wird ein Ausziehbolzen in die Ausnehmung eingeführt, wobei der Ausziehbolzen kraftschlüssig mit dem Nagelkopf verbunden wird. Zum Greifen des Ausziehbolzens ist eine Ausziehvorrichtung vorgesehen, mit der eine Ausziehbewegung zum Ausziehen des Nagels aus den miteinander verbundenen Bauteilen durchgeführt werden kann. Selbst wenn aufgrund der beschriebene Konstruktion eine Fügeverbindung gelöst werden kann, wird der Nagel aus einer kraft- und formschlüssigen Verbindung herausgezogen. Dies führt zwangsläufig zu einer Beschädigung der miteinander verbundenen Bauteile.

Es ist daher die Aufgabe vorliegender Erfindung, einen Nagel sowie ein damit zu verwendendes Fügeverfahren und auch ein Löseverfahren bereitzustellen, mit dem sich mindestens zwei übereinander angeordnete nicht vorgelochte Bauteile miteinander verbinden und wieder lösen lassen.

### 3. Zusammenfassung der Erfindung

Die obige Aufgabe wird gelöst durch einen Nagel gemäß Patentanspruch 1, ein Fügeverfahren für den Nagel gemäß Patentanspruch 8, eine Fügeverbindung gemäß Patentanspruch 10, ein Löseverfahren eines Nagels aus einer Fügeverbindung gemäß Patentanspruch 11 sowie durch ein Herstellungsverfahren des Nagels gemäß Patentanspruch 12. Vorteilhafte Ausführungsformen und Weiterentwicklungen vorliegender ergeben sich aus der nachfolgenden Beschreibung, den Zeichnungen sowie den anhängenden Patentansprüchen.

Vorliegende Erfindung offenbart einen Nagel zum Herstellen einer zerstörungsfrei drehend lösbaren Verbindung zwischen mindestens einem ersten und einem zweiten Bauteil, von denen zumindest ein Bauteil nicht vorgelocht ist. Der Nagel weist die folgenden Merkmale auf: einen Kopf (10) mit einer schaftabgewandten Seite, an der ein Antriebsmerkmal angeordnet ist, und einer schaftzugewandten Seite mit einer Unterkopfringnut, einen integral mit dem Kopf (10) ausgebildeten und sich in axialer Richtung des Nagels erstreckenden Schaft, der an einem dem Kopf (10) gegenüberliegenden Ende in einer Spitze ausläuft, in dem der Schaft einen kopfzugewandten ersten axialen Gewindeabschnitt mit einem selbstformenden Gewinde, einen kopfabgewandten zweiten axialen Gewindeabschnitt mit einem tragendenden und nicht-selbstformenden Gewinde und einen axialen Spitzenbereich aufweist.

Der erfindungsgemäße Nagel wird auf herkömmliche Art und Weise, also ohne ein Drehmoment, gesetzt. Das bedeutet, dass die Fügebewegung des Nagels durch einen impulsartigen Kraftstoß oder aber auch durch ein axiales Eindrücken mit einem oder mehreren Schlägen erfolgt. Vorzugsweise ist der Nagel und insbesondere sein Schaft mit seinem Spitzenbereich derart ausgelegt, dass er in nicht-vorgelochte Bauteile gesetzt werden kann. Dabei verdrängt der Spitzenbereich lateral vorhandenes Bauteilmaterial, sodass der Schaft des Nagels die mindestens zwei übereinander angeordneten Bauteile durchdringt. Gemäß unterschiedlicher bevorzugter Ausgestaltungen des Fügeverfahrens, welches unten näher beschrieben ist, wird der Nagel mit einem Kopfüberstand in Bezug auf das kopfseitige Bauteil oder mit einer Kopfauflage auf dem kopfseitigen Bauteil gesetzt.

Der Schaft des Nagels weist einen kopfseitigen axialen Gewindeabschnitt mit einem selbstformenden Gewinde und einen spitzenseitig oder kopfabgewandt angeordneten Gewindeabschnitt mit einem nicht-selbstformenden Gewinde auf. Mithilfe dieser gezielten Reihenfolge und Anordnung der beiden Gewindeabschnitte auf dem Schaft wird ein drehendes Lösen des Nagels aus einer Bauteilverbindung unterstützt. Denn das selbstformende Gewinde im ersten axialen Gewindeabschnitt, vorzugsweise ein selbstfurchendes und oder ein selbstschneidendes Gewinde, erzeugt während einer Drehbewegung des Nagels entgegen der Gangrichtung des selbstformenden Gewindes ein Mutterngewinde an einer radialen Innenwand einer durch das Setzen des Nagels in der Bauteilverbindung erzeugten Bauteilöffnung.

Dieses bevorzugt erzeugte Innengewinde erleichtert das Lösen des zweiten Gewindeabschnitts mit dem nicht-selbstformenden Gewinde aus dem Bauteilverbund. Denn erfindungsgemäß bevorzugt weisen der erste axialen Gewindeabschnitt mit dem selbstformenden Gewinde und der zweite axialen Gewindeabschnitt mit dem nicht-selbstformenden Gewinde die gleiche Gangrichtung und die gleiche Gewindesteigung auf. Auf diese Weise ist gewährleistet, dass das selbstformende Gewinde ein Mutterngewinde in der Bauteilöffnung erzeugt, die auch durch das Gewinde des zweiten axialen Gewindeabschnitts des Schafts des Nagels nutzbar ist.

Während erfindungsgemäß bevorzugt der erste axiale Gewindeabschnitt mit dem selbstformenden Gewinde ein Herausdrehen des Nagels aus der Bauteilverbindung, also aus den mindestens zwei miteinander verbundenen Bauteilen, unterstützt, fördert der zweite axialen Gewindeabschnitt mit dem nicht-selbstformenden Gewinde einen verlässlichen Halt der mindestens zwei Bauteile aneinander mit Hilfe des darin gesetzten Nagels nach dem Herstellen der Bauteilverbindung.

Gemäß einer bevorzugten Ausführungsform des Nagels weitet sich der Schaft kegelstumpfartig in die Unterkopfringnut auf und ein Freiraum der Unterkopfringnut ist im Radialschnitt des Nagels kegelförmig oder bogenförmig ausgebildet.

Gemäß einer bevorzugten Ausführungsform vorliegender Erfindung wird der Nagel bis zu einer Kopfauflage mit der Kopfunterseite auf dem kopfzugewandten Bauteil gesetzt. Während des Setzens des Nagels wird das Bauteilmaterial nicht nur lateral bzw. radial auswärts verdrängt, sondem auch in axialer Richtung. Der Freiraum der Unterkopfringnut dient dazu, axial verdrängtes Bauteilmaterial während des Fügevorgangs aufzunehmen.

Gemäß der oben beschriebenen bevorzugten Ausgestaltung der Unterkopfringnut vergrößert der Schaft des Nagels seinen Durchmesser während des Einlaufens in die Unterkopfringnut. Anders gesagt, nimmt der Durchmesser des Schafts des Nagels in Richtung des Kopfes im Bereich der Unterkopfringnut kontinuierlich zu. Durch diese radiale Aufweitung des Schafts wird die im Radialschnitt erkennbare konische oder bogenförmige Gestalt der Unterkopfringnut gebildet.

Die Aufweitung des Schafts führt dazu, dass der Schaft vorzugsweise wie ein Stopfen den in den Bauteilen erzeugten Fügekanal verschließt. Denn die radiale Aufweitung des Schafts erstreckt sich über die radiale Außenseite des übrigen Schafts und des Spitzenbereichs hinaus, sodass vorzugsweise ein kraftschlüssiger Kontakt zwischen der radialen Innenseite der Bauteilöffnung und dem Schaft innerhalb der Unterkopfringnut erzeugt wird.

Weiter bevorzugt weist der Schaft des Nagels eine axiale Schaftlänge l zwischen der schaftzugewandten Seite des Kopfes und der Spitze auf und der erste axiale Gewindeabschnitt mit dem selbstformenden Gewinde und der zweite axiale Gewindeabschnitt mit dem nicht-selbstformenden Gewinde haben ein Längenverhältnis von ungefähr 1/2.

Wie oben bereits erläutert worden ist, ist auf dem Schaft kopfzugewandt der erste axiale Gewindeabschnitt mit einem selbstformenden Gewinde angeordnet. In kopfabgewandter Richtung oder in der dem Spitzenbereich zugewandten Richtung ist der zweite axiale Gewindeabschnitt mit einem nicht-selbstformenden Gewinde auf dem Schaft angeordnet. Der erste axiale Gewindeabschnitt unterstützt ein Lösen des Nagels aus der Bauteilverbindung durch das Aufbringen eines Drehmoments auf den Nagel entgegen der Gangrichtung des selbstformenden Gewindes im ersten axialen Gewindeabschnitt. Das nicht-selbstformende Gewinde im zweiten axialen Gewindeabschnitt unterstützt ein verlässliches Halten des Nagels innerhalb der Bauteilverbindung. Um ein ausgewogenes Verhältnis zwischen der Funktion des Herausdrehens des Nagels aus der Bauteilverbindung und dem verlässlichen Halten des Schafts und somit des Nagels in der Bauteilverbindung zu realisieren, hat sich ein Längenverhältnis des ersten axialen Gewindeabschnitts zu dem zweiten axialen Gewindeabschnitt mit 1:2 als vorteilhaft erwiesen.

Nach einer weiteren bevorzugten Ausführungsform des Nagels hat dessen Schaft eine axiale Schaftlänge l zwischen der schaftzugewandten Seite des Kopfes und der Spitze und der erste axiale Gewindeabschnitt mit dem selbstformenden Gewinde erstreckt sich über einen Bereich von 10 % bis 30 % der Schaftlänge l und der zweite axiale Gewindeabschnitt mit dem nicht-selbstformenden Gewinde über einen Bereich von 40 % bis 70 % der Schaftlänge l.

Wie oben bereits erläutert worden ist, unterstützt der erste axiale Gewindeabschnitt mit seinem selbstformenden Gewinde ein Lösen der hergestellten Bauteilverbindung durch Herausschrauben des Nagels aus dem Bauteilverbund. Der zweite axiale Gewindeabschnitt mit seinem nichtselbstformend Gewinde unterstützt vorzugsweise den Halt der Bauteile in der Bauteilverbindung und im Speziellen des in die Bauteile gefügten Nagels. Eine derartige mit dem Nagel erzeugte Bauteilverbindung wird in unterschiedlichen Bauteilmaterialien erzeugt oder sie ist unterschiedlichen mechanischen Belastungen ausgesetzt. Um der Materialwahl der Bauteile, der mechanischen Belastung der Bauteilverbindung und weiteren Einflussparametern auf die hergestellte Bauteilverbindung Rechnung tragen zu können, ist die axiale Länge des ersten und zweiten axialen Gewindeabschnitts variabel einstellbar. Damit wird in Abstimmung mit der herzustellenden Bauteilverbindung vor der Herstellung des Nagels die jeweilige Länge des ersten axialen Gewindeabschnitts und des zweiten axialen Gewindeabschnitts konfiguriert, sodass verbindungsspezifische Konfigurationen des Nagels hergestellt werden können.

Vorzugsweise verjüngt sich der erste axiale Gewindeabschnitt mit dem selbstformenden Gewinde in Richtung des Kopfes, vorzugsweise durch eine Reduktion eines Gewindeaußendurchmessers und/oder eine Reduktion eines Gewindekerndurchmessers.

Gemäß einer bevorzugten Ausgestaltung des Durchmessers des Schafts des Nagels verringert sich dieser im ersten axialen Gewindeabschnitt mit dem selbstformenden Gewinde in Richtung des Kopfes des Nagels. Dies führt dazu, dass beim Lösen der Verbindung der erste axiale Gewindeabschnitt mit dem selbstformenden Gewinde zunächst in einen sich verjüngenden Fügekanal innerhalb der miteinander verbundenen Bauteile eingeschraubt werden muss. Aufgrund der Zunahme des Durchmessers des Schafts im ersten axialen Gewindeabschnitt erhöht sich bevorzugt die Radialkraft oder radiale Pressung zwischen dem selbstformenden Gewinde und der Innenwand der Bauteilöffnung. Diese erhöhte Flächenpressung unterstützt ein Ausformen eines Mutterngewindes in der radialen Innenwand der Bauteilöffnung bzw. Bauteilöffnungen. Auf diese Weise wird ein Ausformen des Mutterngewindes gefördert, in welches vorzugsweise das nicht-selbstformende Gewinde des zweiten axialen Gewindeabschnitts mit weniger Aufwand eingeschraubt werden kann.

Gemäß unterschiedlicher bevorzugter Ausführungsformen vorliegender Erfindung wird die bevorzugte Verjüngung des Schaftdurchmessers in dem axial auf den Kopf (10) zulaufenden ersten Gewindeabschnitt durch zwei unterschiedliche konstruktive Alternativen gelöst. Diese werden bevorzugt allein oder in Kombination eingesetzt. Gemäß einer bevorzugten Ausgestaltung wird der äußere Gewindedurchmesser reduziert, indem die radiale Ausdehnung der Gewindestege verringert wird. Gemäß einer alternativen Ausgestaltung wird vorzugsweise ein Kerndurchmesser im ersten axialen Gewindeabschnitt axial zulaufend auf den Kopf (10) stetig reduziert. Auf diese Weise ergibt sich bevorzugt eine kegelstumpfähnliche Gestalt des Schafts im ersten axialen Gewindeabschnitt.

Eine weitere bevorzugte Ausführungsform des Nagels sieht vor, dass sich der axiale Spitzenbereich über einen Bereich von 20 % bis 50 % der Schaftlänge l erstreckt.

Erfindungsgemäß bevorzugt erstreckt sich der axiale Spitzenbereich über einen variablen axialen Längenbereich des Schafts. In Abhängigkeit von dem Material der Bauteile sowie in Abhängigkeit von der vorteilhaften Einstellung einer Länge des zweiten axialen Gewindeabschnitts mit dem nicht-selbstformenden Gewinde wird die Länge des axialen Spitzenbereichs angepasst. Der axiale Spitzenbereich umfasst minimal einen Abschnitt, in dem sich der Schaft des Nagels zu einer Spitze verjüngt.

Erfindungsgemäß bevorzugt wird die Spitze in einem axialen Querschnitt durch zwei einander gegenüberliegende Kreisbögen gebildet, die sich an der Spitze schneiden. Dennoch ist bevorzugt die Spitze nicht scharf ausgebildet, sondern vorzugsweise abgerundet. Diese bevorzugte kreisbogenförmig ausgebildete Spitzenkonfiguration stellt ein verlässliches Einlaufen des Schafts des Nagels in das Bauteilmaterial sicher, wobei das Bauteilmaterial in radialer und axialer Richtung verdrängt wird.

Zur vorteilhaften Unterstützung des Einlaufens der Nagelspitze in das Bauteilmaterial ist es bevorzugt, dass sich an die Spitzenkonfiguration ein glatter Schaftbereich ohne Gewinde oder eine sonstige Profilierung anschließt. Somit ergibt sich vorzugsweise der Gewindebereich aus der Konfiguration der Spitze und eines sich daran anschließenden Schaftbereichs ohne Gewinde oder äußere Profilierung.

Erfindungsgemäß bevorzugt weist der Schaft des Nagels zumindest im zweiten axialen Gewindeabschnitt mit dem nicht-selbstformenden Gewinde einen trilobularen oder einen quadrolobularen oder einen runden Querschnitt auf.

Bei einem bevorzugten runden Querschnitt des Schafts im zweiten axialen Gewindeabschnitt legt sich die radiale Innenseite der Bauteilöffnung bevorzugt kraft- und formschlüssig an die Außenseite des Nagelschafts an. Auf diese Weise wird ein umlaufend gleichmäßiger Verbund und eine gleichmäßige Befestigung des Nagelschafts im Bauteil realisiert.

Die alternativ bevorzugte trilobulare oder quadrolobulare Querschnittsform des Schafts im zweiten axialen Gewindebereich hat ebenfalls den Effekt, dass sich nach dem Setzen des Nagels die radiale Innenseite der Bauteilöffnungen an die radiale Außenseite des zweiten axialen Gewindeabschnitts anlegt. Wird der Nagel erfindungsgemäß bevorzugt gedreht, um vorzugsweise die Bauteile in der Bauteilverbindung gegeneinander zu verspannen, einen Kopfüberstand zu beseitigen, oder um den Nagel aus der Bauteilverbindung zu lösen, dann muss der trilobular oder quadrolobular geformte Schaft innerhalb der Bauteilöffnung gedreht werden.

Dadurch, dass die trilobulare oder quadrolobulare Querschnittsform in Umfangsrichtung einen sich regelmäßig verändernden Radius aufweist, muss ein Gewindeabschnitt großen Querschnitts in einen Öffnungsbereich kleineren Durchmessers gedreht werden. Die auf diese Weise entstehende zunehmende Flächenpresspassung zwischen der radialen Innenseite der Bauteilöffnung und der radialen Außenseite des trilobularen oder quadrolobularen Schafts unterstützt den Halt des Nagels in der Bauteilverbindung, da sich während des Drehens des Nagels vorzugsweise zumindest die reibschlüssige Verbindung zwischen Bauteil und Nagel periodisch erhöht.

Aufgrund der mit der trilobularen und quadrolubularen Form verbunden technischen Vorteile weist der Schaft neben dem zweiten axialen Gewindeabschnitt auch im ersten axialen Gewindeabschnitt bevorzugt diese Querschnittsform auf.

Vorliegende Erfindung offenbart zudem ein Fügeverfahren für den Nagel gemäß mindestens einer der oben beschriebenen Ausgestaltungen, welches die folgenden Schritte aufweist: Eintreiben des Nagels mit mindestens einem Schlag oder Kraftstoß in einen Stapel aus mindestens zwei Bauteilen, von denen zumindest ein Bauteil nicht vorgelocht ist.

Der oben beschriebene Nagel mit seinen bevorzugten Ausgestaltungen wird mithilfe eines bekannten Setzverfahrens in die mindestens zwei übereinander angeordneten Bauteile gesetzt. Dieses Setzverfahren erfolgt drehungsfrei mit einem impulsartigen Kraftstoß oder ebenfalls drehungsfrei mit mindestens zwei Kraftstößen, vorzugsweise unterschiedlicher Stärke. So ist es bevorzugt, den Nagel in die mindestens zwei übereinander angeordneten nicht vorgelochten Bauteile derart einzuschießen bzw. einzuschlagen, dass die schaftzugewandte Unterseite des Kopfes auf dem kopfzugewandten Bauteil aufliegt. Gemäß einer weiteren bevorzugten Ausgestaltung wird durch einen ersten Kraftstoß oder Schlag der Nagel so weit in die übereinander angeordneten nicht vorgelochten Bauteile eingeschlagen oder eingeschossen, dass der bevorzugte axiale Spitzenbereich die übereinander angeordneten Bauteile durchdrungen hat. Nachfolgend wird dann der Nagel so weit in die miteinander zu verbinden Bauteile eingedrückt, bis die bauteilzugewandte Unterseite des Nagelkopfes auf dem Bauteil aufliegt. Es ist ebenfalls bevorzugt, den Nagel mit einem Kopfüberstand in Bezug auf das benachbart zum Kopf (10) angeordnete Bauteil zu setzen.

Gemäß einer bevorzugten Ausgestaltung des Fügeverfahrens ist als weiterer Schritt vorgesehen: Aufbringen eines Drehmoments in Einschraubrichtung des kopfzugewandten ersten axialen Gewindeabschnitts auf den Nagel, nachdem das Eintreiben des Nagels mit einem Kopfüberstand über das kopfzugewandte Bauteil beendet ist und bis der Kopf (10) des Nagels auf dem kopfzugewandten Bauteil aufliegt, oder Aufbringen eines Drehmoments in Einschraubrichtung des kopfzugewandten ersten axialen Gewindeabschnitts auf den Nagel, nachdem das Eintreiben des Nagels beendet ist, sodass die mindestens zwei Bauteile gegeneinander verspannt werden.

Aufgrund der erfindungsgemäß bevorzugten Konfiguration des Nagels mit seinem ersten und zweiten axialen Gewindeabschnitt ist es bevorzugt, dass sich das Fügeverfahren aus einem axialen Eintreiben und einem nachgeschalteten Drehen des Nagels zusammensetzt. Dabei wird der Nagel in Einschraubrichtung gedreht. Gemäß unterschiedlichen bevorzugten Ausgestaltungen dieses dem axialen Fügen nachgeschalteten Einschraubschritt ist es bevorzugt, mithilfe dieser Drehbewegung einen vorhandenen Kopfüberstand des Kopfes nach dem axialen Fügen zu beseitigen, d. h. eine Auflage des Kopfes auf dem kopfseitigen Bauteil zu realisieren.

Selbst wenn das axiale Fügen gemäß einer weiteren Alternative des Fügeverfahrens zu einer Kopfauflage geführt hat, ist es vorzugsweise von Vorteil, wenn nachfolgend die Bauteile zusätzlich miteinander verspannt werden. Zu diesem Zweck ist es ebenfalls bevorzugt, den Nagel in Einschraubrichtung zu drehen. Auf diese Weise werden die miteinander zu verbindenden Bauteile in Richtung des Kopfes des Nagels bewegt, wodurch ein zusätzliches Verspannen der miteinander zu verbindenden Bauteile erzielt wird.

Vorliegende Erfindung offenbart zudem eine Fügeverbindung bestehend aus einem Stapel von mindestens zwei Bauteilen, von denen zumindest ein Bauteil nicht vorgelocht ist und die über einen Nagel gemäß mindestens einem der vorhergehenden Patentansprüche 1 bis 7 miteinander verbunden sind.

Außerdem offenbart vorliegende Erfindung ein Löseverfahren eines Nagels mit mindestens einem kopfzugewandten ersten axialen Gewindeabschnitt, insbesondere ein Nagel gemäß mindestens einer der oben beschriebenen Ausgestaltungen, aus einer Verbindung von mindestens zwei Bauteilen, insbesondere ist von den Bauteilen mindestens ein Bauteil nicht vorgelocht, welches die folgenden Schritte aufweist: Aufbringen eines Drehmoments entgegen der Einschraubrichtung des kopfzugewandten ersten axialen Gewindeabschnitts, sodass das Gewinde, insbesondere ein selbstformendes Gewinde, des kopfzugewandten ersten axialen Gewindeabschnitts ein Gewinde in die mindestens zwei Bauteile einformt, und Entfernen des Nagels aus der Bauteilöffnung, nachdem sich der Nagel aus dem Gewindeeingriff mit den Bauteilen gelöst hat.

Aufgrund der bevorzugten Konfiguration des Nagels besteht die Möglichkeit, den Nagel aus einer Bauteilverbindung mithilfe einer Drehbewegung zu lösen. Das Löseverfahren ist für Bauteilverbindungen mit vorgelochten Bauteilen sowie für Bauteilverbindungen mit nicht vorgelochten Bauteilen geeignet. Zu diesem Zweck wird ein Drehmoment in Ausschraubrichtung des ersten und zweiten axialen Gewindeabschnitts auf den Nagel aufgebracht. Diese Möglichkeit besteht, da der Nagelkopf ein Antriebsmittel zum Übertragen eines Drehmoments auf den Nagel aufweist. Während des Drehens des Nagels in Ausschraubrichtung arbeiten bevorzugt das selbstformende Gewinde oder ein nicht-selbstformendes Gewinde des ersten axialen Gewindeabschnitts und das nicht-selbstformende Gewinde des zweiten axialen Gewindeabschnitts unterstützend zusammen. Denn während der erste Gewindeabschnitt ein Gewinde in die radiale Innenseite der Bauteilöffnung bzw. Bauteilöffnungen formt, realisiert der zweite axiale Gewindeabschnitt weiterhin einen verlässlichen Halt des Nagels in den Bauteilöffnungen. Nachdem das Gewinde während der weiteren Drehung des Nagels in Ausschraubrichtung läuft, zunehmend das Außengewinde des zweiten axialen Gewindeabschnitts in das durch den ersten axialen Gewindeabschnitt geformte Gewinde ein, um den Nagel aus der Bauteilverbindung zerstörungsfrei zu lösen. Auf diese Weise ergänzen sich funktionell die unterschiedlichen Gewindeformen im ersten und im zweiten axialen Gewindeabschnitt.

Ein Herstellungsverfahren eines Nagels, welches die folgenden Schritte aufweist: Bereitstellen eines Drahtrohlings, Kaltwalzen des Drahtrohlings derart, dass ein Nagel vorliegt mit einem Kopf mit einer schaftabgewandten Seite, an der ein Antriebsmerkmal angeordnet ist, und einer schaftzugewandten Seite mit einer Unterkopfringnut, und mit einem integral mit dem Kopf ausgebildeten und sich in axialer Richtung des Nagels erstreckenden Schaft, der an einem dem Kopf gegenüberliegenden Ende in einer Spitze ausläuft, in dem der Schaft einen kopfzugewandten ersten axialen Gewindeabschnitt mit einem selbstformenden Gewinde, einen kopfabgewandten zweiten axialen Gewindeabschnitt mit einem tragendenden und nicht-selbstformenden Gewinde und einen axialen Spitzenbereich aufweist.

### 4. Kurzzusammenfassung der Zeichnungen

Die bevorzugten Ausführungsformen vorliegender Erfindung werden unter Bezugnahme auf die begleitenden Zeichnungen näher erläutert. Es zeigen:
- Figur 1: eine erste bevorzugte Ausführungsform des erfindungsgemäßen Nagels,
- Figur 2: eine weitere bevorzugte Ausführungsform des erfindungsgemäßen Nagels,
- Figur 3: eine dritte bevorzugte Ausführungsform des erfindungsgemäßen Nagels,
- Figur 4: eine vergrößerte Darstellung einer bevorzugten Ausführungsform einer Kopfkonfiguration des Nagels,
- Figur 5: eine Draufsicht auf eine bevorzugte Ausgestaltung des Kopfes mit Antriebsmittel,
- Figur 6: eine vergrößerte Teildarstellung einer bevorzugten Ausgestaltung des Nagelkopfes bis mit daran anschließendem Schaft,
- Figur 7: eine weitere vergrößerte Darstellung einer bevorzugten Ausgestaltung des Nagelkopfes mit daran anschließendem Schaft,
- Figur 8: eine weitere bevorzugte Ausgestaltung des Nagelkopfes mit sich daran anschließendem Schaft,
- Figur 9: eine vergrößerte Darstellung des bevorzugten Spitzenbereichs des Nagels,
- Figur 10: eine bevorzugte Ausführungsform einer Bauteilverbindung mit zwei Bauteilen und einem Nagel,

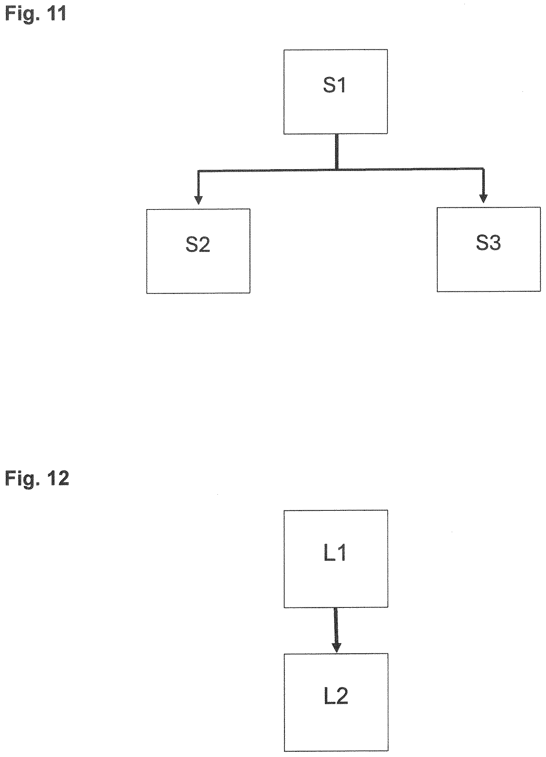

- Figur 11: ein Flussdiagramm einer bevorzugten Ausführungsform eines Fügeverfahrens des Nagels,
- Figur 12: ein Flussdiagramm einer bevorzugten Ausführungsform eines Löseverfahren des Nagels aus einer Bauteilverbindung und

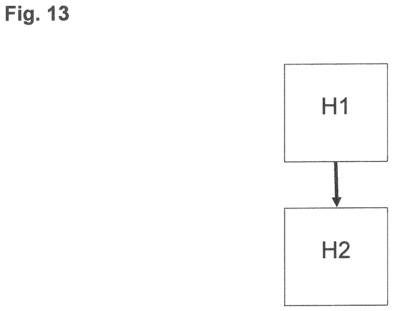

- Figur 13: ein Flussdiagramm einer bevorzugten Ausführungsform eines Herstellungsverfahrens des Nagels.

### 5. Detaillierte Beschreibung der bevorzugten Ausführungsformen

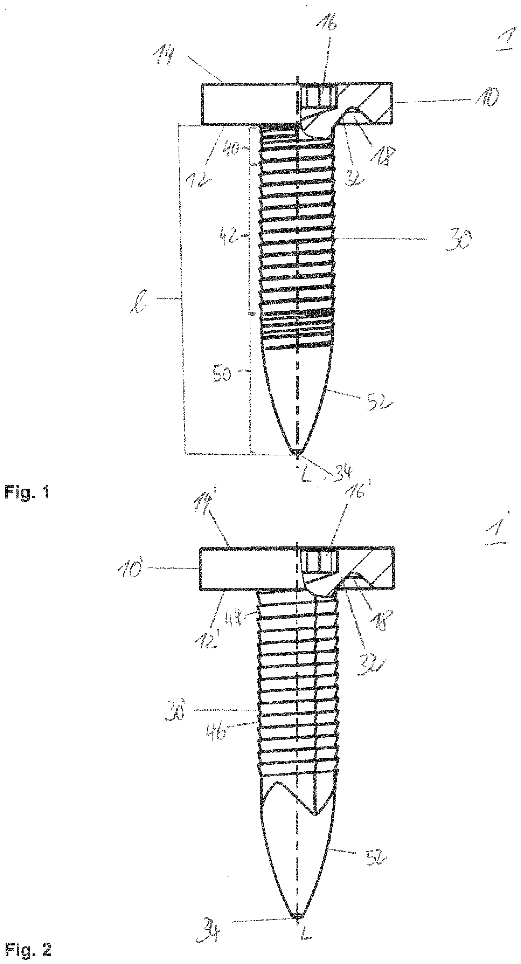

Eine bevorzugte Ausführungsform des erfindungsgemäßen Nagels 1 zeigt Figur 1. Weitere bevorzugte Ausgestaltungen des Nagels 1 sind den Figuren 2-9 zu entnehmen.

Der Nagel 1 ist integral mittels Kaltwalzens aus einem Drahtrohling (nicht gezeigt) hergestellt. Er weist einen Kopf 10 und einen sich von einer schaftzugewandten Seite 12 des Kopfes 10 erstreckenden Schaft 30 auf. Der Kopf 10 hat gegenüberliegend zur schaftzugewandten Seite 12 eine schaftabgewandten Seite 14. An der schaftabgewandten Seite 14 ist ein Antriebsmittel 16 in Form einer Öffnung vorgesehen. Diese Öffnung ist komplementär zu einem Werkzeug zur Übertragung eines Drehmoments auf den Nagel 1 ausgebildet.

Vorzugsweise hat das Werkzeug die Form eines Kreuz-, Schlitz-, Torx- oder Inbus-Schraubendrehers. Somit ist das Antriebsmittel 16 in der schaftabgewandten Seite 14 angepasst, um eine formschlüssige Verbindung allein zur Übertragung eines Drehmoments mit dem Werkzeug herzustellen. Somit lässt sich vorzugsweise nicht eine Zugkraft in schaftabgewandter Richtung mit dem Werkzeug auf den Nagel 1 übertragen.

An der schaftzugewandten Seite 12 des Kopfes 10 ist eine Unterkopfringnut 18 vorgesehen. Die Unterkopfringnut 18 umläuft den Schaft 30 und bildet eine Vertiefung in schaftabgewandter Richtung im Kopf 10.

In einem Axialschnitt des Nagels 1 entlang seiner Mittellängsachse L oder in einem Radialschnitt des Kopfes 10 in radialer Richtung (siehe Figuren 1-4, 6-8) weist die Unterkopfringnut 18 vorzugsweise eine kegelstumpfartige Form auf. Zur Bildung dieser Form weitet sich der Schaft 30 in Richtung des Kopfes 10 innerhalb der Unterkopfringnut 18 radial auf, wie es in den genannten Figuren zu erkennen ist.

Wenn der Nagel 1 in mindestens zwei übereinander vorzugsweise nicht vorgelochten Bauteilen B1, B2 gefügt wird, erzeugt der Schaft 30 einen Fügekanal F in den Bauteilen B1, B2. Beim Fügen des Nagels 1 wird Bauteilmaterial radial auswärts sowie in axialer Richtung verdrängt. Der Nagel 1 wird vorzugsweise bis zur Auflage der schaftzugewandten Seite 12 des Kopfes 10 auf dem kopfzugewandten Bauteil B1 gesetzt. Dadurch bildet der sich radial aufweitende Schaft 30 innerhalb der kegelstumpfartig geformten Unterkopfringnut 18 eine Art Stopfen, der den Fügekanal F benachbart zum Kopf 10 verschließt. Diese bevorzugte Stopfenkonfiguration des Schafts 30 benachbart zum Kopf 10 und bedingt durch die kegelstumpfartige Querschnittsgestalt der Unterkopfringnut 18 dient der bevorzugten Abdichtung des Fügekanals F und damit der Fügestelle von Nagel 1 und Bauteilen B1, B2 gegen das Eindringen von Medien, wie beispielsweise Wasser, Gas oder Luft oder ähnliches.

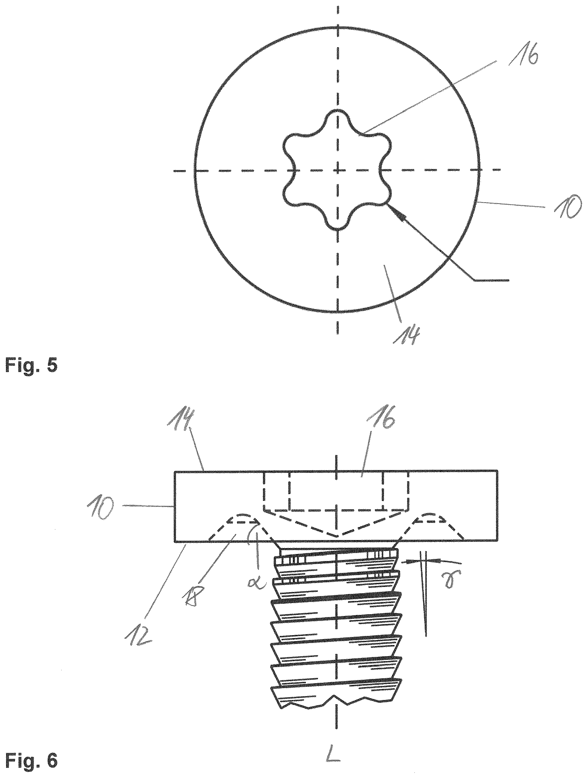

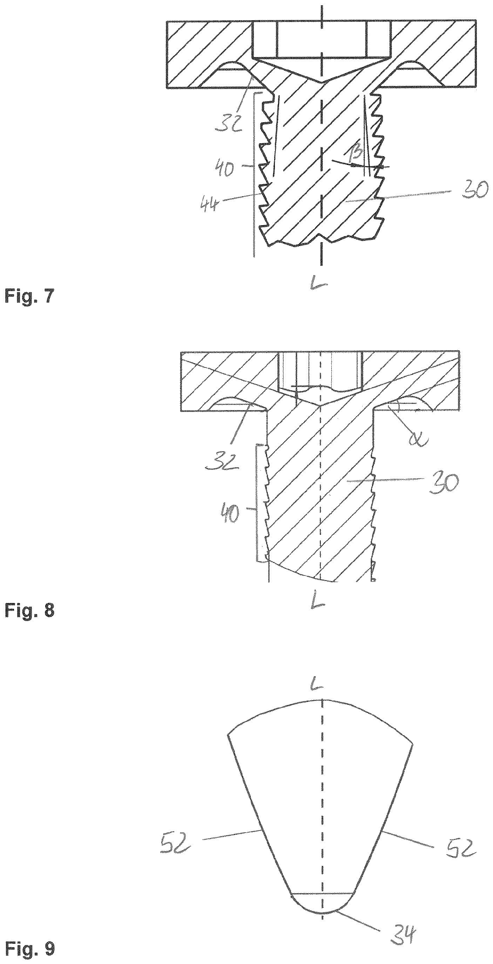

Um die Funktionalität des radial aufgeweiteten Schafts 30 in der Unterkopfringnut 18 an ein Verformungsverhalten unterschiedlicher Bauteilmaterialien anpassen zu können, ist ein Winkel α der radialen Aufweitung des Schafts 30 anpassbar. So ist vorzugsweise der Winkel α zwischen der radialen Außenseite 32 des sich aufweitenden Schafts 30 und einer Senkrechten zur Längsachse L (siehe Figur 6) größer, um leichter verformbares Bauteilmaterial aufnehmen zu können. Entsprechend hat bevorzugt die Unterkopfringnut 18 ein größeres Aufnahmevolumen verglichen zu einer Unterkopfringnut 18 mit einem kleineren Aufweitungswinkel α gemäß Figur 8.

Alternativ zu der oben beschriebenen Ausgestaltung ist es ebenfalls bevorzugt, die Unterkopfringnut 18 mit einem bogenförmigen Querschnitt vorzusehen. In gleicher Weise wie ein kegelstumpfartiger Querschnitt erlaubt ein bogenförmiger Querschnitt unterschiedlich große Aufweitungswinkel α des Schafts 30.

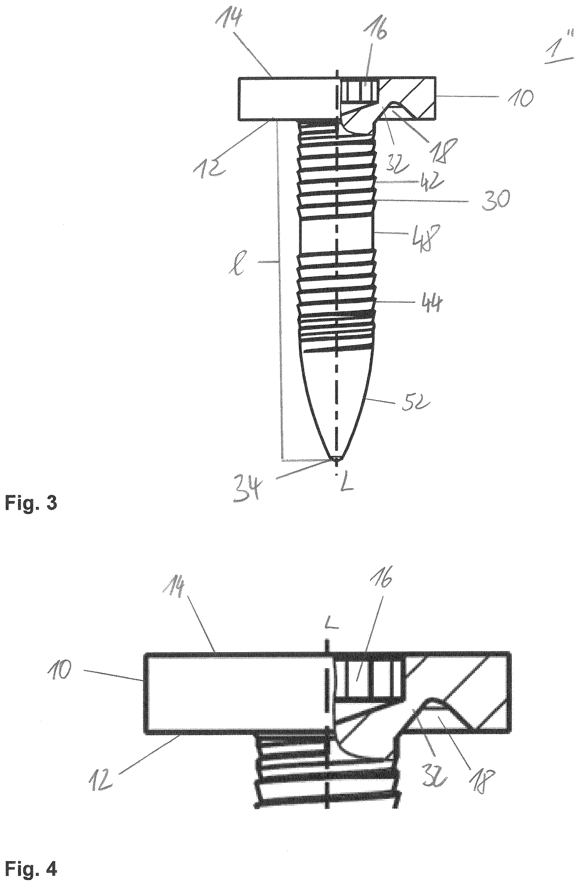

Weiterhin bevorzugt wird bei einem kleineren Aufweitungswinkel α, wie Figur 8 im Vergleich zu Figur 6 zeigt, der Kopf 10 mit einer mechanisch stabileren Konfiguration bereitgestellt. Dies ist vorzugsweise daran erkennbar, dass eine Wandstärke zwischen der Öffnung des Antriebsmittels 16 und der Unterkopfringnut 18 größer ist als in der Ausführungsform der Figur 4. Somit kann bei kleineren Aufweitungswinkeln α bevorzugt ein größeres Drehmoment vom Antriebsmittel 16 über den Kopf 10 auf den Schaft 30 übertragen werden.

Der Schaft 30 des Nagels 1 erstreckt sich von der schaftzugewandten Seite 12 des Kopfes 10 und läuft in einer Spitze 34 eines Spitzenbereichs 50 aus. Zwischen dem Kopf 10 und der Spitze 34 ist auf der radialen Außenseite des Schafts 10 ein Gewinde 38 vorgesehen. Das Gewinde 38 unterteilt sich in einen kopfzugewandten axialen ersten Gewindeabschnitt 40 und einen kopfabgewandten axialen zweiten Gewindeabschnitt 42.

Der erste axiale Gewindeabschnitt 40 ist benachbart zum Kopf 10 angeordnet. Benachbart bedeutet in diesem Zusammenhang, dass gemäß einer bevorzugten Ausführungsform vorliegender Erfindung der erste axiale Gewindeabschnitt 40 an der schaftzugewandten Seite 12 des Kopfes 10 endet.

Gemäß einer weiteren bevorzugten Ausführungsform vorliegender Erfindung endet der erste Gewindeabschnitt 40 in einem Abstand zur schaftzugewandten Seite 12, der in einem Bereich von 50 % bis 150 % einer axialen Kopfstärke liegt (siehe Figur 8).

Der Schaft 30 hat eine Länge l, die zwischen der schaftzugewandten Seite 12 des Kopfes 10 und der Spitze 34 gemessen wird. Der erste axiale Gewindeabschnitt 40 erstreckt sich vorzugsweise über einen axialen Längenbereich des Schafts 30 von 10 % bis 30 % der Länge l des Schafts 30. Innerhalb des ersten axialen Gewindeabschnitts 40 ist ein selbstformendes Gewinde 44 vorgesehen, welches selbstfurchend und/oder selbstschneidend ausgebildet ist. Basierend auf einer Drehung des Schafts 30 um seine Längsachse L in einer Bauteilöffnung oder im Fügekanal F formt, also schneidet und/oder furcht, das selbstformende Gewinde 44 ein entsprechendes Mutterngewinde in die radiale Innenwand des Fügekanals F.

Erst bei einem drehenden Lösen des in einer Bauteilverbindung gesetzten Nagels 1 formt der erste axiale Gewindeabschnitt 40 ein Mutterngewinde in die radiale Innenwand des Fügekanals F. Daher ist das selbstformende Gewinde 44 kopfseitig angeordnet und nicht benachbart zur Spitze 34, wie es von den Fließformschrauben im Stand der Technik genutzt wird.

Benachbart zum ersten axialen Gewindeabschnitt 40 befindet sich ein zweiter axialer Gewindeabschnitt 42 mit einem nicht-selbstformenden Gewinde 46. Das nicht-selbstformende Gewinde 46 wird vorzugsweise durch ein Standard-, Grob- oder Feingewinde gebildet. Entsprechend ist beispielsweise ein Spitzgewinde, ein Rohrgewinde, ein Trapezgewinde, ein Sägegewinde oder eine ähnlich bekannte Gewindeform angeordnet.

Das selbstformende Gewinde 44 und das nicht-selbstformende Gewinde 46 weisen vorzugsweise die gleiche Steigung und die gleiche Gangrichtung auf. Dadurch ist gewährleistet, dass beim drehenden Lösen des Nagels 1 aus dem Fügekanal F das nicht-selbstformende Gewinde 46 in das durch das selbstformende Gewinde 44 erzeugte Innengewinde des Fügekanals F einlaufen und dieses beim Lösen des Nagels nutzen kann.

Nach dem Fügen des Nagels 1 in die mindestens zwei Bauteile B1, B2 verkrallt sich bevorzugt die radiale Innenwand des Fügekanals F in dem Gewinde 46 des zweiten axialen Gewindeabschnitts 42. Damit wirkt das nicht-selbstformende Gewinde 46 als tragendes Gewinde in der Bauteilverbindung.

Erfindungsgemäß bevorzugt ist ein axiales Längenverhältnis des ersten 40 und des zweiten axialen Gewindeabschnitts 42, also des selbstformenden Gewindes 44 zu dem nicht-selbstformenden Gewinde 46, annähernd 1:2. Somit erstreckt sich das tragende Gewinde 46 annähernd doppelt so lang auf dem Schaft 30 wie das selbstformende Gewinde 44.

Im Hinblick auf die axiale Erstreckung des nicht-selbstformenden Gewinde 46 ist es weiter bevorzugt, dass sich der zweite axiale Gewindeabschnitt 42 über einen axialen Bereich von 40 % bis 70 % der Schaftlänge l erstreckt.

Gemäß den in den Figuren 1 und 2 gezeigten bevorzugten Ausführungsformen vorliegender Erfindung grenzen der erste axiale Gewindeabschnitt 40 und der zweite axiale Gewindeabschnitt 42 direkt aneinander an.

Gemäß einer weiteren bevorzugten Ausführungsform vorliegender Erfindung ist zwischen dem ersten axialen Gewindeabschnitt 40 und dem zweiten axialen Gewindeabschnitt 42 ein gewindeloser Schaftabschnitt 48 vorgesehen (siehe Figur 3). Es hat sich gezeigt, dass während des Fügens des Nagels 1 in die mindestens zwei Bauteile B1, B2 die Innenwand des Fügekanals F zunächst radial auswärts federt und den Reibschluss zum Schaft 30 entlastet. Beim bevorzugten Zurückfedern ist ein Teil der radialen Innenwand des Fügekanals F bereits kopfzugewandt außerhalb des zweiten Gewindeabschnitts 42 angeordnet. Während der weiteren Fügebewegung des Nagels 1 bis zur bevorzugten Kopfauflage wird durch den gewindelosen Abschnitt 48 eine Reibung zwischen Schaft 30 und Innenwand des Fügekanals F und der damit verbundene Materialabrieb an der Innenwand reduziert.

Gemäß einer weiteren bevorzugten Ausführungsform vorliegender Erfindung weist der Schaft 30 im axialen Längsschnitt eine konische Grundform auf. Das bedeutet, dass sich der Schaft 30 vom Kopf 10 in Richtung Spitze 34 kontinuierlich verjüngt. Diese konische Grundform ist unabhängig davon, ob der Schaft 30 einen runden, ovalen, trilobularen oder quadrolobularen Querschnitt aufweist. Dies hat den Effekt, dass sich die kopfzugewandten Gewindegänge mit größerem Durchmesser beim Eindrehen oder Verspannen des Nagels 1 besser im Fügekanal F einfurchen.

Gemäß einer bevorzugten Ausführungsform vorliegender Erfindung erstreckt sich diese konische Grundform zumindest über den zweiten axialen Gewindeabschnitt 42. Entsprechend nimmt ein Durchmesser des Schafts 30 im zweiten axialen Gewindeabschnitt 42 in Richtung Spitze 34 kontinuierlich ab. Vorzugsweise nimmt der Durchmesser im zweiten axialen Gewindeabschnitt 42 dadurch bis zu 15 % ab in Bezug auf den größten Durchmesser des Schafts 30.

Weiter bevorzugt reicht der konisch zunehmende Durchmesserbereich des Schafts 30 bis in den ersten axialen Gewindeabschnitt 40.

Gemäß einer weiteren bevorzugten Ausführungsform vorliegender Erfindung hat der Schaft 30 einen trilobularen oder einen quadrolobularen Querschnitt.

Erfindungsgemäß weiter bevorzugt ist ein axialer Spitzenbereiches 50 in seinem Schaftquerschnitt rund ausgebildet. Die Spitze 34 wird im Axialschnitt durch zwei einander gegenüberliegend angeordnete Kreisbögen 52 gebildet, die sich an der Spitze 34 schneiden. Der Schnittpunkte der Kreisbögen 52 ist bevorzugt abgerundet, um eine scharfe Spitze zu vermeiden. Der Spitzenbereich 50 erstreckt sich axial bevorzugt über eine Länge von 20 % bis 50 % der Schaftlänge l.

Der runde Schaftquerschnitt im Spitzenbereich 50 bewirkt beim Eindringen der Spitze 34 in die Bauteile B1, B2 bevorzugt eine radial-homogene Materialverdrängung im Vergleich zu einem unrunden Schaftquerschnitt. Dieser reduziert vorzugsweise einen Durchschlag beim Fügen des Nagels 1 in die Bauteile.

Wie oben bereits erwähnt worden ist, hat der Schaft 30 eine trilobulare oder eine quadrolobulare Querschnittsform. Der im Querschnitt kreisförmige Spitzenbereich 50 erstreckt sich radial nicht über den trilobulare oder quadrolobularen Schaftquerschnitt hinaus. Die trilobulare oder quadrolobulare Querschnittsform des Schafts 30 verbessert vorzugsweise eine Gewindeausformung bei einem drehenden Lösen des Nagels 1 aus der Bauteilverbindung.

Beim Herausschrauben des Nagels 1 ist der Fügekanal F in seinem Querschnitt zunächst durch den Eintreibvorgang trilobular oder quadrolobular geformt. Erst durch die Drehbewegung des Nagels 1 wird das Bauteilmaterial zwischen den Eckpunkten der trilobularen oder quadrolobularen Querschnittsform des Schafts 30 radial verdrängt und eine höhere Flächenpressung dadurch erzeugt. Durch diese erhöhte Flächenpressung wird das Furchen bzw. Schneiden des Gewindes an den Eckpunkten des Schafts begünstigt. Zudem werden vorzugsweise prozessbedingte Schädigungen des Fügekanals F durch das axiale Eintreiben beim Herausschrauben des Nagels 1 ausgeglichen. Als Drittes wirkt vorzugsweise die trilobulare oder quadrolobulare Querschnittsform des Schafts und die entsprechende Einprägung in den Fügekanal F als Verdrehhemmung des Nagels 1 nach dem axialen Eintreiben des selbigen.

Während der Schaftquerschnitt im zweiten axialen Gewindeabschnitt 42 vorzugsweise eine trilobulare oder eine quadrolobulare Form aufweist, ist der Schaftquerschnitt im ersten axialen Gewindeabschnitt 40 vorzugsweise rund ausgebildet. Der runde Querschnitt unterstützt das Ausformen eines Mutterngewindes im Fügekanal F, wenn der Nagel 1 drehend aus der Fügeverbindung gelöst wird.

Eine weitere bevorzugte Ausführungsform vorliegender Erfindung umfasst eine Verjüngung des Schafts 30 im Endbereich des ersten axialen Gewindeabschnitts 40 zulaufend auf die schaftzugewandte Seite 12 des Kopfes 10. Dadurch nimmt das selbstfurchende Gewinde 42 in seiner radialen Ausdehnung mit zunehmender Annäherung an den Kopf 10 ab. Diese Ausgestaltung wird bevorzugt mit der oben beschriebenen sich konisch verjüngenden Querschnittsform des Schafts 30 in Richtung Spitze 34 kombiniert.

Gemäß einer ersten Ausgestaltung der bevorzugten Verjüngung, die in Figur 6 veranschaulicht ist, sind die Gewindespitzen radial verkürzt. Verbindet man die verkürzten Gewindespitzen untereinander, schließt diese Verbindungslinie mit einer Parallelen zur Längsachse L des Schafts 30 einen Winkel γ ein. Der Winkel γ liegt bevorzugt im Bereich von 5° ≤ γ ≤ 10°.

Gemäß einer zweiten Ausgestaltung der bevorzugten Verjüngung, die in Figur 7 gezeigt ist, ist der Kern des Schafts 30 auf den Kopf 10 zulaufend konisch geformt. Das bedeutet, dass ein Kerndurchmesser im ersten axialen Gewindeabschnitt 40 zulaufend auf den Kopf 10 kontinuierlich abnimmt. Dazu schließt ebenfalls bevorzugt eine radiale Kernaußenseite mit der Längsachse L des Schafts 30 einen Winkel β im Bereich von 5° ≤ β ≤ 10° ein.

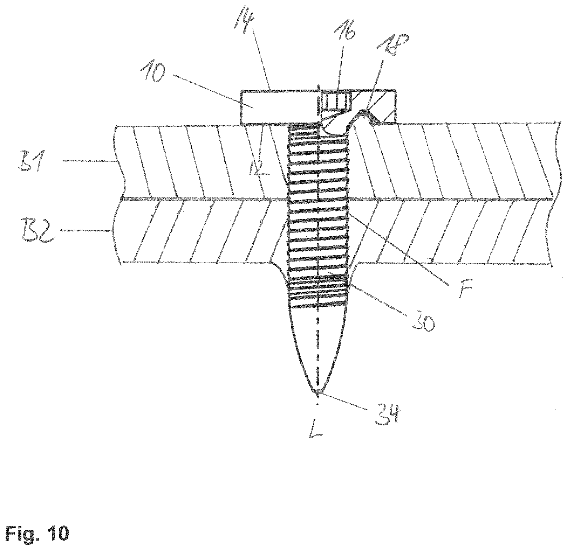

Die bevorzugte Fügeverbindung 80 bestehend aus mindestens zwei Bauteilen B1, B2 und verbunden über den Nagel 1 zeigt gemäß einer bevorzugten Ausführungsform vorliegender Erfindung Figur 10. Hier liegt der Kopf 10 ohne Kopfüberstand direkt auf dem Bauteil B1 auf.

Um den Nagel 1 in die mindestens zwei Bauteile B1, B2 zu setzen, wird er mit einem oder einer Mehrzahl von Kraftstößen in die nicht vorgelochten Bauteile B1, B2 eingetrieben (Schritt S1). Dabei wird vorzugsweise eine Fügegeschwindigkeit im Bereich von 1 m/s bis 40 m/s genutzt. Gemäß einer bevorzugten Ausgestaltung des Fügeverfahrens liegt der Kopf 10 des Nagels 1 auf dem kopfzugewandten Bauteil B1 auf.

Um die Bauteile B1, B2 zusätzlich gegeneinander zu verspannen, ist es bevorzugt, ein Drehmoment in Einschraubrichtung des ersten axialen Gewindeabschnitts 40 auf den Nagel 1 aufzubringen (Schritt S3). Dadurch werden die Bauteile B1, B2 gegen den Kopf 10 gezogen und dadurch verspannt.

Gemäß einer weiteren bevorzugten Ausführungsform des Fügeverfahrens wird der Nagel 1 so weit in die Bauteile B1, B2 gefügt, dass der Kopf 10 mit einem Kopfüberstand zum benachbarten Bauteil B1 angeordnet ist. Diese Vorgehensweise benötigt einen geringeren Energieaufwand im Vergleich zum Fügen bis zur Kopfauflage auf dem Bauteil 1. Durch den geringeren Betrag an Fügeenergie werden vorzugsweise die Bauteile B1, B2 weniger verformt und die Durchzüge weniger aufgeweitet.

Um den Kopfüberstand (nicht gezeigt) zu beseitigen, wird ein Drehmoment in Einschraubrichtung der Gewinde 42, 44 in Kombination mit einer Axialkraft auf den Nagel 1 aufgebracht. Das Drehen des Nagels 1 in Einschraubrichtung bewegt diesen in axialer Richtung in die Bauteile B1, B2, bis der Kopf 10 auf dem kopfzugewandten Bauteil B1 aufliegt (Schritt S2).

Um den Nagel 1 aus einer bestehenden Fügeverbindung zu lösen, wird das erfindungsgemäße Löseverfahren angewandt. Gemäß einer bevorzugten Ausgestaltung wird im Schritt L1 ein Drehmoment entgegen der Einschraubrichtung des kopfzugewandten ersten axialen Gewindeabschnitts 40 aufgebracht. Basierend auf diesem Drehmoment formt das selbstformende Gewinde 42 des kopfzugewandten ersten axialen Gewindeabschnitts 40 ein Mutterngewinde in die radiale Innenwand in zumindest der Bauteilöffnung des ersten kopfzugewandten Bauteils B1. Das auf diese Weise ausgeformte Mutterngewinde wird bevorzugt zum Einlaufen des Gewindes 44 des zweiten axialen Gewindeabschnitts 42 genutzt, um den Nagel 1 aus der Bauteilöffnung zu entfernen (Schritt L2).

Zudem offenbart vorliegende Erfindung ein Herstellungsverfahren des Nagels 1 mithilfe eines Kaltwalzprozesses. In einem ersten Schritt H1 wird ein Drahtrohling bereitgestellt. Nachfolgend wird dieser Drahtrohling im Schritt H2 kaltgewalzt. Das Kaltwalzen erfolgt derart, dass der Nagel 1 vorliegt und die folgenden Merkmale aufweist: einen Kopf 10 mit einer schaftabgewandten Seite 14, an der ein Antriebsmerkmal 16 angeordnet ist, und mit einer schaftzugewandten Seite 12 mit einer Unterkopfringnut 18. Des Weiteren umfasst der Nagel 1 einen integral mit dem Kopf 10 ausgebildeten und sich in axialer Richtung des Nagels 1 erstreckenden Schaft 30, der an einem dem Kopf 10 gegenüberliegenden Ende in einer Spitze 34 ausläuft. Zudem hat der Schaft 30 einen kopfzugewandten ersten axialen Gewindeabschnitt 40 mit einem selbstformenden Gewinde 43, einen kopfabgewandten zweiten axialen Gewindeabschnitt 42 mit einem tragenden und nicht-selbstformenden Gewinde 44 sowie einen axialen Spitzenbereich 50.

### 6. Bezugszeichenliste

- 1: Nagel
- 10: Kopf
- 12: schaftzugewandte Seite des Kopfes
- 14: schaftabgewandte Seite des Kopfes
- 16: Antriebsmittel des Kopfes
- 18: Unterkopfringnut
- 30: Schaft
- 32: sich radial aufweitender Bereich in der Unterkopfringnut 18
- 34: Spitze
- 36: Spitzenbereich
- 38: Gewinde
- 40: kopfzugewandter erster axialer Gewindeabschnitt
- 42: kopfabgewandter zweiter axialer Gewindeabschnitt
- 44: selbstformendes Gewinde
- 46: nicht-selbstformendes Gewinde
- 48: gewindeloser axialer Schaftabschnitt
- 50: axialer Spitzenbereich
- 52: Kreisbögen, die die Spitze 34 bilden
- 80: Fügeverbindung
- L: Längsachse
- B1, B2: Bauteile
- F: Fügekanal
- α: Aufweitungswinkel
- γ: Winkel der Verjüngung des Schafts 30 angrenzend an den Kopf 10
- β: Winkel der konischen Verjüngung des Kerns des Schafts 30 im ersten axialen Gewindeabschnitt 40
- l: Länge des Schafts

## Patentansprüche

1. Ein Nagel (1) zum Herstellen einer zerstörungsfrei drehend lösbaren Verbindung zwischen mindestens einem ersten (B1) und einem zweiten Bauteil (B2), von denen zumindest ein Bauteil nicht vorgelocht ist, der die folgenden Merkmale aufweist:
a. einen Kopf (10) mit einer schaftabgewandten Seite (14), an der ein Antriebsmerkmal (16) angeordnet ist, und einer schaftzugewandten Seite (12) mit einer Unterkopfringnut (18),
b. einen integral mit dem Kopf (10) ausgebildeten und sich in axialer Richtung des Nagels (1) erstreckenden Schaft (30), der an einem dem Kopf (10) gegenüberliegenden Ende in einer Spitze (34) ausläuft, in dem
c. der Schaft (30) einen kopfzugewandten ersten axialen Gewindeabschnitt (40) mit einem selbstformenden Gewinde (43), einen kopfabgewandten zweiten axialen Gewindeabschnitt (42) mit einem tragendenden und nicht-selbstformenden Gewinde (44) und einen axialen Spitzenbereich (50) aufweist.

2. Der Nagel (1) gemäß Patentanspruch 1, in dem sich der Schaft (30) kegelstumpfartig in die Unterkopfringnut (18) aufweitet und ein Freiraum der Unterkopfringnut (18) im Radialschnitt des Nagels (1) kegelförmig oder bogenförmig ausgebildet ist.

3. Der Nagel (1) gemäß Patentanspruch 1 oder 2, dessen Schaft (30) eine axiale Schaftlänge (l) zwischen der schaftzugewandten Seite (12) des Kopfes (10) und der Spitze (34) aufweist und der erste axiale Gewindeabschnitt (40) mit dem selbstformenden Gewinde (43) und der zweite axiale Gewindeabschnitt (42) mit dem nicht-selbstformenden Gewinde (44) ein Längenverhältnis von ungefähr 1/2 aufweisen.

4. Der Nagel (1) gemäß mindestens einem der vorhergehenden Patentansprüche 1 bis 3, dessen Schaft (30) eine axiale Schaftlänge (l) zwischen der schaftzugewandten Seite (12) des Kopfes (10) und der Spitze (34) aufweist und sich der erste axiale Gewindeabschnitt (40) mit dem selbstformenden Gewinde (43) über einen Bereich von 10 % bis 30 % der Schaftlänge (l) und sich der zweite axiale Gewindeabschnitt 42) mit dem nicht-selbstformenden Gewinde (44) über einen Bereich von 40 % bis 70 % der Schaftlänge (l) erstrecken.

5. Der Nagel (1) gemäß mindestens einem der vorhergehenden Patentansprüche, in dem sich der erste axiale Gewindeabschnitt (40) mit dem selbstformenden Gewinde (43) in Richtung des Kopfes (10) verjüngt, vorzugsweise durch eine Reduktion eines Gewindeaußendurchmessers und/oder eine Reduktion eines Gewindekerndurchmessers.

6. Der Nagel (1) gemäß mindestens einem der vorhergehenden Patentansprüche, in dem sich der axiale Spitzenbereich (50) über einen Bereich von 20 % bis 50 % der Schaftlänge (l) erstreckt.

7. Der Nagel (1) gemäß mindestens einem der vorhergehenden Patentansprüche, in dem der Schaft (30) zumindest im zweiten axialen Gewindeabschnitt (42) mit dem nicht-selbstformenden Gewinde (44) einen trilobularen oder einen quadrolobularen oder einen runden Querschnitt aufweist.

8. Ein Fügeverfahren für den Nagel (1) gemäß mindestens einem der vorhergehenden Patentansprüche, welches die folgenden Schritte aufweist:
Eintreiben (S1) des Nagels (1) mit mindestens einem Schlag oder Kraftstoß in einen Stapel aus mindestens zwei Bauteilen (B1, B2), von denen zumindest ein Bauteil nicht vorgelocht ist.

9. Das Fügeverfahren gemäß Patentanspruch 8 mit dem weiteren Schritt:
Aufbringen eines Drehmoments in Einschraubrichtung des kopfzugewandten ersten axialen Gewindeabschnitts (40) auf den Nagel (1), nachdem das Eintreiben des Nagels (1) mit einem Kopfüberstand über das kopfzugewandte Bauteil (B1) beendet ist und bis der Kopf (10) des Nagels (1) auf dem kopfzugewandten Bauteil (B 1) aufliegt (S2), oder
Aufbringen eines Drehmoments in Einschraubrichtung des kopfzugewandten ersten axialen Gewindeabschnitts (40) auf den Nagel (1), nachdem das Eintreiben des Nagels (1) beendet ist, sodass die mindestens zwei Bauteile (B1, B2) gegeneinander verspannt werden (S3).

10. Eine Fügeverbindung bestehend aus einem Stapel von mindestens zwei Bauteilen (B1, B2), von denen zumindest ein Bauteil nicht vorgelocht ist und die über einen Nagel (1) gemäß mindestens einem der vorhergehenden Patentansprüche 1 bis 7 miteinander verbunden sind.

11. Ein Löseverfahren eines Nagels (1) mit zumindest einem kopfzugewandten ersten axialen Gewindeabschnitt, insbesondere ein Nagel gemäß mindestens einem der Patentansprüche 1 bis 7, aus einer Verbindung von mindestens zwei Bauteilen (B1, B2), welches die folgenden Schritte aufweist:
Aufbringen (L1) eines Drehmoments entgegen der Einschraubrichtung des kopfzugewandten ersten axialen Gewindeabschnitts (40), sodass das Gewinde (43), insbesondere ein selbstformendes Gewinde, des kopfzugewandten ersten axialen Gewindeabschnitts (40) ein Gewinde in mindestens ein Bauteil einformt, und
Entfernen des Nagels (1) aus der Bauteilöffnung, nachdem sich der Nagel (1) aus dem Gewindeeingriff mit den Bauteilen (B 1, B2) gelöst hat.

12. Ein Herstellungsverfahren eines Nagels (1), welches die folgenden Schritte aufweist:
Bereitstellen eines Drahtrohlings (H1),
Kaltwalzen (H2) des Drahtrohlings derart, dass ein Nagel (1) vorliegt mit
einem Kopf (10) mit einer schaftabgewandten Seite (14), an der ein Antriebsmerkmal (16) angeordnet ist, und einer schaftzugewandten Seite (12) mit einer Unterkopfringnut (18), und mit
einem integral mit dem Kopf (10) ausgebildeten und sich in axialer Richtung des Nagels (1) erstreckenden Schaft (30), der an einem dem Kopf (10) gegenüberliegenden Ende in einer Spitze (34) ausläuft, in dem der Schaft (30) einen kopfzugewandten ersten axialen Gewindeabschnitt (40) mit einem selbstformenden Gewinde (43), einen kopfabgewandten zweiten axialen Gewindeabschnitt (42) mit einem tragendenden und nicht-selbstformenden Gewinde (44) und einen axialen Spitzenbereich (50) aufweist.
